# EUROPÄISCHE PATENTSCHRIFT

(11) **EP 1 031 759 B1**
(45) Veröffentlichungstag und Bekanntmachung des Hinweises auf die Patenterteilung: **19.01.2005**
(21) Anmeldenummer: 00103831.4
(22) Anmeldetag: 23.02.2000
(51) Int. Cl.: F16F 13/26

(54) **Anordnung eines schaltbaren, hydraulisch dämpfenden Lagers**
Arrangement of a switchable, hydraulically-damped support
Agencement d'un support commutable à amortissement hydraulique

(30) Priorität: 24.02.1999 DE 19915798
(43) Veröffentlichungstag der Anmeldung: 30.08.2000
(73) Patentinhaber: Carl Freudenberg KG, 69469 Weinheim (DE)
(72) Erfinder: Hettler, Werner, 68309 Mannheim (DE); Simuttis, Arnold, Dr., 55545 Bad Kreuznach (DE)

(56) Entgegenhaltungen:
- EP-A- 0 836 033
- EP-A- 0 852 304
- DE-C- 4 238 752
- US-A- 4 828 234
- US-A- 4 840 358

## Beschreibung

Die Erfindung betrifft eine Anordnung eines schaltbaren, hydraulisch dämpfenden Lagers mit den Merkmalen aus dem Oberbegriff von Anspruch 1.

### Technisches Gebiet

### Stand der Technik

Ein solches Lager ist aus der US 4,840,358 bekannt. Das vorbekannte Lager weist zwei signalbetätigbare schaltbare Ventile auf, die je nach Betriebszustand durch ein elektrisch ansteuerbares Stellglied betätigbar sind.

Ein weiteres Lager ist aus der DE 42 38 752 C1 bekannt. Durch die Zug- und Druckbewegungen des Lagers wird die Luftkammer über das Rückschlagventil leergepumpt, um die Federsteifigkeit des Lagers zu erhöhen. Durch die Verwendung des Rückschlagventils ist die Entlüftung der Luftkammer ohne Fremdhilfe möglich. Für die Belüftung der Luftkammer wird das Ventil geöffnet und dadurch die Luftkammer mit der Atmosphäre verbunden. Die Membran bewegt sich dann wieder in ihre Ausgangsposition.

### Darstellung der Erfindung

Der Erfindung liegt die Aufgabe zugrunde, ein schaltbares, hydraulisch dämpfendes Lager der eingangs genannten Art derart weiterzuentwickeln, daß dieses bei sehr kleinen Abmessungen und niedriger Bauhöhe bedarfsweise eine große Federsteifigkeit und eine hohe Dämpfung aufweist.

Diese Aufgabe wird erfindungsgemäß mit den Merkmalen von Anspruch 1 gelöst. Auf vorteilhafte Ausgestaltungen nehmen die Unteransprüche bezug.

Im Rahmen der vorliegenden Erfindung ist es zur Lösung der Aufgabe vorgesehen, daß das Rückschlagventil selbsttätig ausgebildet ist, dass das schaltbare Ventil signalleitend mit dem Motormanagement der Verbrennungskraftmaschine verbunden ist und die Luftkammer im Leerlauf der Verbrennungskraftmaschine mit der Umgebung verbindet oder bei Drehzahlen außerhalb des Leerlaufbereichs geschlossen ist und dass die Luftkammer auf den bei geschlossen geschaltetem Ventil und Zugbewegungen des Lagers zur Erhöhung der Lagersteifigkeit mit über das selbsttätig ausgebildete Rückschlagventil nachströmender Luft aufblähbar ist und dass bei geschlossen geschaltetem Ventil und Druckbewegungen des Lagers das Rückschlagventil selbsttätig in Geschlossenstellung bringbar ist. Als Umgebung kann in Abhängigkeit vom jeweiligen Anwendungsfall die das Lager umgebende Atmosphäre betrachtet werden.

Das Ventil ist signalleitend mit dem Motormanagement einer Verbrennungskraftmaschine verbunden und verbindet die Luftkammer im Leerlauf der Verbrennungskraftmaschine mit der Umgebung oder ist bei Drehzahlen außerhalb des Leerlaufbereichs verschlossen. Zur Funktion des erfindungsgemäßen Lagers wird folgendes ausgeführt:

Bevorzugt gelangt das Lager als Motorlager zur Abstützung einer Verbrennungskraftmaschine zur Anwendung. Im Leerlauf der Verbrennungskraftmaschine ist das Ventil geöffnet, so daß der Druck innerhalb der Luftkammer dem Atmosphärendruck entspricht. In diesem Betriebszustand ist die Federsteifigkeit des Lagers vergleichsweise gering, um Leerlaufvibrationen isolieren oder tilgen zu können.

In Drehzahlbereichen oberhalb der Leerlaufdrehzahl, also im Fahrbetrieb, ist das Ventil demgegenüber geschlossen; die Luftkammer ist zur Umgebung hin hermetisch verschlossen. Während des Fahrbetriebs wird die Dämpfungsflüssigkeit zur Dämpfung großamplitudiger, niedrigfrequenter Schwingungen zwischen dem Arbeits- und dem Ausgleichskammer durch
den Dämpfungskanal hin- und herverlagert. In diesem Betriebszustand verformt sich die die Luftkammer begrenzende Membran nur wenig, da die Luftkammer verschlossen und die darin befindlichen Luft während der Dämpfung der Schwingungen abwechselnd komprimiert und entspannt wird. Bei großen Schwingungsamplituden und daraus resultierenden großen Zugbewegungen des Lagers, entsteht ausfederungsbedingt ein Unterdruck innerhalb der Arbeitskammer. Dieser Unterdruck wölbt die Membran in Richtung der Arbeitskammer, so daß sich eine Volumenvergrößerung der Luftkammer ergibt. Da das Ventil geschlossen ist, besteht zum Ausgleich des Unterdrucks innerhalb der Luftkammer nur die Möglichkeit, daß Luft aus der Umgebung über das Rückschlagventil in die Luftkammer nachströmt. Bei einer Belastungsumkehr von einer Zugbewegung des Lagers in eine Druckbewegung schließt das Rückschlagventil selbsttätig. Die zuvor bei Zugbewegung in die Luftkammer gesaugte Luftmasse vermag daher nicht mehr aus der Luftkammer zu entweichen. Durch den erhöhten Druck innerhalb der Luftkammer stellt sich insgesamt eine größere Steifigkeit des Lagers ein, und die Dämpfung wird dadurch verbessert.

Gemäß einer vorteilhaften Ausgestaltung kann es vorgesehen sein, daß das Traglager einen Kern und ein Kernblech umfaßt, das mit der Tragfeder haftend verbunden ist, wobei das Kernblech mit dem Kern formschlüssig und dichtend verbunden ist. Hierbei ist von Vorteil, daß sich das mehrteilig ausgebildete Traglager einfach an verschiedene Lagertypen anpassen läßt. Es besteht beispielsweise die Möglichkeit, unterschiedlich ausgebildete Kerne mit jeweils demselben Kernblech zu verbinden, wobei lediglich die Anschlußbereiche der Kerne übereinstimmend ausgebildet sind. Neben unterschiedlich gestalteten Kernen können diese auch aus voneinander abweichenden, an den jeweiligen Anwendungsfall angepaßten Werkstoffen bestehen.

Die Luftkammer ist bevorzugt von der Membran, dem Kern und dem Kernblech begrenzt. Dabei erstreckt sich die Membran bevorzugt quer zur Richtung der eingeleiteten Schwingungen und ist mit einem sich in axialer Richtung erstreckenden Flansch des Kernblechs dichtend verbunden. Die Membran, die sich quer zur Richtung der eingeleiteten Schwingungen erstreckt, hat gegenüber Membranen, die sich in Richtung der eingeleiteten Schwingungen erstrecken, wie beispielsweise die Membran aus dem eingangs genannten Stand der Technik, den Vorteil, daß sie unmittelbar ohne Umlenkung der Strömung und dadurch auftretende Verluste beaufschlagt werden kann. Eine Integration im Kern benötigt praktisch keine zusätzliche Bauhöhe, so daß das Lager kompakt ausgeführt werden kann. Außerdem ist eine geometrische Trennung vom Düse-Membran-System für das Abstimmen der Funktion von Vorteil.

Die Tragfeder und die Membran sind bevorzugt materialeinheitlich und einstückig ineinander übergehend ausgebildet. Sowohl die Tragfeder als auch die Membran werden bevorzugt in einem Arbeitsgang mit dem Kernblech vulkanisiert, was im Hinblick auf eine kostengünstige und einfache Fertigung von hervorzuhebendem Vorteil ist.

Werden besonders weiche Membranen nötig, sind größere Durchmesser durch eine separate Ausführung der Membran sinnvoll.

Das Ventil kann elektromagnetisch betätigbar sein. Davon abweichende Betätigungen, wie beispielsweise eine pneumatische oder hydraulische Betätigung sind ebenfalls denkbar, wobei sich die elektromagnetische Betätigung des Ventils wegen der exakten Schaltbarkeit besonders für die Verwendung mit Motorlagern eignet.

Bevorzugt bilden das Ventil und das Rückschlagventil eine vormontierbare Einheit. Die Montage der Einheit am Lager ist dadurch wesentlich vereinfacht und die Gefahr von Montagefehlern auf ein Minimum begrenzt.

Der Kern kann im wesentlichen kreisringförmig ausgebildet sein, wobei die Einheit mit dem Kern verbunden ist. Beispielsweise besteht die Möglichkeit, daß die Einheit in einer zentralen Ausnehmung des Kerns angeordnet und mit dem Kern verschraubt ist. Die strömungsleitende Verbindung zwischen der Luftkammer und der Atmosphäre entweder über das Ventil oder über das Rückschlagventil erfolgt dabei durch eine hohlzylinderförmige Kernschraube oder einen hohlzylinderförmigen Stehbolzen. Durch derartige Bauteile läßt sich nicht nur eine Befestigung der Einheit, bestehend aus Ventil und Rückschlagventil am Traglager erreichen, diese Teile bilden gleichzeitig eine Verbindungsleitung für die Luft zwischen der Umgebung und der Luftkammer.

Der Kern und/oder die Einheit können zumindest einen Anschlagpuffer aufweisen, wobei die Membran zur Begrenzung extremer Auslenkbewegungen bei Druckbewegungen des Lagers an den Anschlagpuffer anlegbar ist. Bei großamplitudigen, tieffrequenten Schwingungen entstehen beispielsweise Druckspitzen innerhalb der Arbeitskammer. Um die im Vergleich zur Tragfeder wesentlich dünner ausgebildete Membran keinen unerwünscht hohen mechanischen Belastungen bei Druckbewegungen des Lagers auszusetzen, kann der Anschlagpuffer vorgesehen sein. Das Lager weist dadurch gleichbleibend gute Gebrauchseigenschaften während einer langen Gebrauchsdauer auf.

Die Membran kann auf der dem Anschlagpuffer zugewandten Seite eine Oberflächenprofilierung aufweisen. Die Oberflächenprofilierung kann beispielsweise durch ein regelloses Profil in Form von Anschlagnoppen gebildet sein, um Anschlaggeräusche bei einer Berührung des Anschlagpuffers zu vermeiden.

Die Membran kann einen Anschlagpuffer bei statischer Vorlast des Lagers unter elastischer Vorspannung anliegend berühren. Durch eine solche Ausgestaltung weist das erfindungsgemäße Lager weiter verbesserte dämpfende Eigenschaften auf.

Zumindest die Tragfeder kann außenumfangsseitig von einer Wärmeschutzkappe umschlossen sein. Die Wärmeschutzkappe ist bevorzugt ortsfest am Traglager festgelegt und verhindert eine unmittelbare Wärmeabstrahlung einer angeschlossenen Verbrennungskraftmaschine auf die aus einem elastomeren Werkstoff bestehende Tragfeder. Außerdem ist von Vorteil, daß auch die innerhalb des Arbeits- und des Ausgleichskammers befindliche Dämpfungsflüssigkeit vor einer unerwünscht hohen Temperaturbeaufschlagung geschützt ist, was im Hinblick auf gleichbleibend gute Gebrauchseigenschaften von hervorzuhebenden Vorteil ist.

### Ausführung der Erfindung

Zwei Ausführungsbeispiele der erfindungsgemäßen Anordnung werden nachfolgend anhand der Zeichnungen näher erläutert.

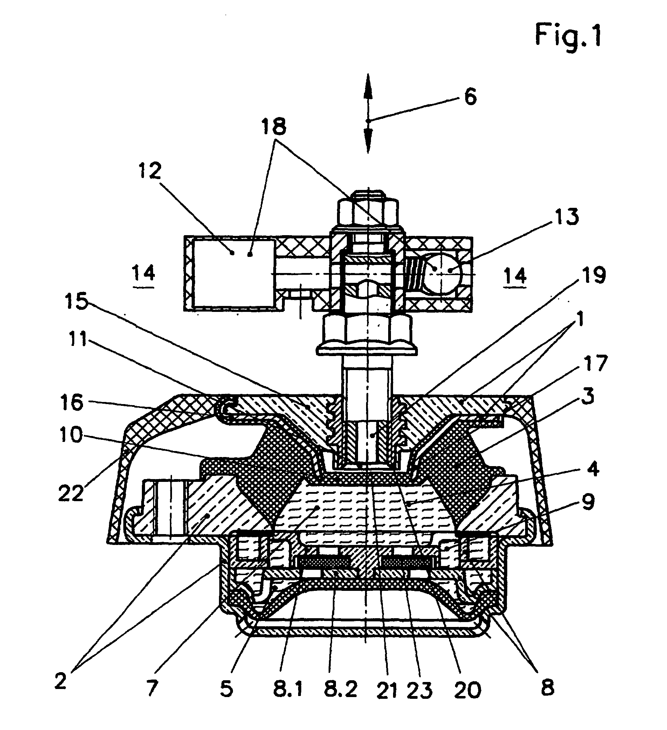

In Figur 1 ist ein Ausführungsbeispiel einer erfindungsgemäßen Anordnung in schematischer Darstellung gezeigt. Das Lager ist als schaltbares, hydraulisch dämpfendes Lager ausgebildet und umfaßt ein Traglager 1 und ein Auflager 2, die durch die Tragfeder 3 aufeinander abgestützt sind. Die Arbeits- 4 und die Ausgleichskammer 5 sind jeweils mit Dämpfungsflüssigkeit 7 gefüllt und in Richtung 6 der eingeleiteten Schwingungen hintereinanderliegend angeordnet. Durch den Dämpfungskanal 9, der sich innerhalb der Trennwand 8 befindet, sind die Arbeitskammer 4 und die Ausgleichskammer 5 flüssigkeitsleitend miteinander verbunden. Die Trennwand 8 ist in diesem Ausführungsbeispiel zweiteilig ausgebildet, wobei zwischen den beiden Teilen 8.1, 8.2 der Trennwand 8 eine Entkopplungsmembran aus elastomerem Werkstoff zur Isolierung hochfrequenter, kleinamplitudiger Schwingungen angeordnet ist.

In axialer Richtung, auf der dem Traglager 1 zugewandten Seite, ist die Arbeitskammer 4 von einer Membran 10 aus elastomerem Werkstoff begrenzt, die ebenfalls die Begrenzung für die Luftkammer 11 bildet. Die Luftkammer 11 ist durch das elektromagnetisch betätigbare Ventil 12 und das Rückschlagventil 13 strömungsleitend mit der Umgebung 14 verbunden, wobei die Einheit 18, bestehend aus dem Ventil 12 und dem Rückschlagventil 13 mit dem Kern 15 verschraubt ist, der eine Ausnehmung 19 aufweist, die in Figur 1 zentral angeordnet ist.

Die Luftkammer 11 ist bei geschlossenem Ventil 12 und Zugbewegung des Lagers zur Erhöhung der Lagersteifigkeit mit über das Rückschlagventil 13 nach strömender Luft aufblähbar. Zur Funktion des erfindungsgemäßen Lagers wird folgendes ausgeführt:

Das gezeigte Lager gelangt als Motorlager zur Abstützung einer Verbrennungskraftmaschine zur Anwendung. Im Leerlauf der Verbrennungskraftmaschine ist das Ventil 12 geöffnet, so daß der Druck innerhalb der Luftkammer 11 dem Atmosphärendruck entspricht. In diesem Betriebszustand ist die Federsteifigkeit des Lagers vergleichsweise gering, um Leerlaufvibrationen isolieren oder tilgen zu können.

In Drehzahlbereichen oberhalb der Leerlaufdrehzahl, also im Fahrbetrieb, ist das Ventil 12 demgegenüber geschlossen; die Luftkammer ist zur Umgebung hin hermetisch verschlossen. Während des Fahrbetriebs wird die Dämpfungsflüssigkeit 7 zur Dämpfung großamplitudiger, niedrigfrequenter Schwingungen zwischen dem Arbeits- 4 und dem Ausgleichskammer 5 durch den Dämpfungskanal 9 hin- und herverlagert. In diesem Betriebszustand verformt sich die die Luftkammer 11 begrenzende Membran 10 nur wenig, da die Luftkammer 11 verschlossen und die darin befindlichen Luft während der Dämpfung der Schwingungen abwechselnd komprimiert und entspannt wird. Bei Druckbewegungen des Lagers legt sich die Membrab 10 mit ihrer Oberflächenprofilierung 21 an den Anschlagpuffer 20 an. Bei großen Schwingungsamplituden und daraus resultierenden großen Zugbewegungen des Lagers, entsteht ausfederungsbedingt ein Unterdruck innerhalb der Arbeitskammer 4. Dieser Unterdruck wölbt die Membran 10 in Richtung der Arbeitskammer 4, so daß sich eine Volumenvergrößerung der Luftkammer 11 ergibt. Da das Ventil 12 geschlossen ist, besteht zum Ausgleich des Unterdrucks innerhalb der Luftkammer 11 nur die Möglichkeit, daß Luft aus der Umgebung 14 über das Rückschlagventil 13 in die Luftkammer 11 nachströmt. Bei einer Belastungsumkehr von einer Zugbewegung des Lagers in eine Druckbewegung schließt das Rückschlagventil 13 selbsttätig. Die zuvor bei Zugbewegung in die Luftkammer 11 gesaugte Luftmasse vermag daher nicht mehr aus der Luftkammer 11 zu entweichen. Durch den erhöhten Druck innerhalb der Luftkammer 11 stellt sich insgesamt eine größere Steifigkeit des Lagers ein, und die Dämpfung wird dadurch verbessert.

In diesem Ausführungsbeispiel weist der Kern 15 einen kreisringförmigen Anschlagpuffer 20 auf, an den die Membran zur Begrenzung extremer Auslenkbewegungen bei Druckbewegungen des Lagers anlegbar ist.
Die Wärmeschutzkappe 22 ist mit dem Traglager 1 ortsfest verbunden und überdeckt die Tragfeder 3 und die Arbeitskammer 4 in axialer Richtung. Dadurch werden der elastomere Werkstoff der Tragfeder 3 sowie die in der Arbeitskammer 4 befindliche Dämpfungsflüssigkeit 7 vor unerwünscht hoher Temperaturbeaufschlagung, beispielsweise von einer gelagerten Verbrennungskraftmaschine, geschützt.

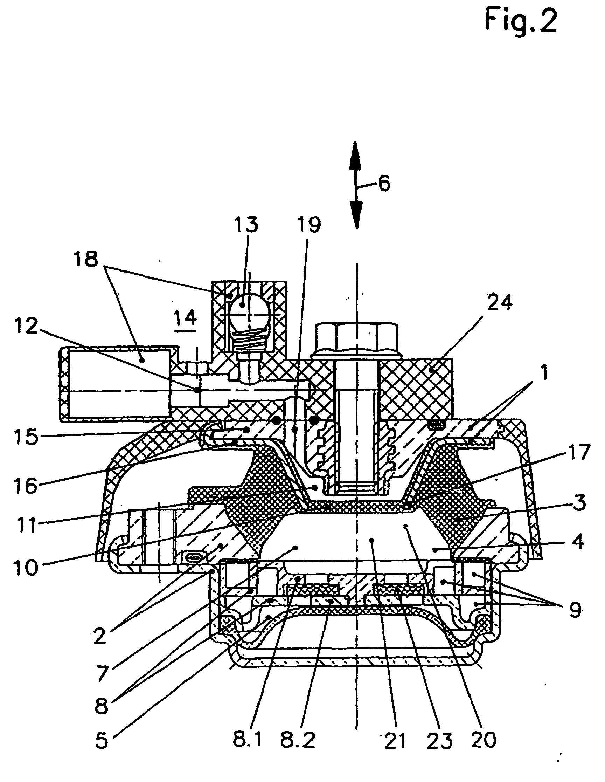

Figur 2 zeigt ein zweites Ausführungsbeispiel, bei dem die luftleitende Ausnehmung 19 seitlich angeordnet ist. Damit wird möglich, die schaltende Einheit 18 aus geschaltetem Ventil 12 und Rückschlagventil 13 mehr in radialer Richtung versetzt anzuordnen und die Gesamtbauhöhe zu reduzieren. Hilfreich dabei ist außerdem, den am Kern 15 befestigten Halter 24, der je nach Platzverhältnissen im Fahrzeug entweder mit dem Motor oder der Karosserie verbunden ist, in die Luftführung zur Luftkammer 11 mit einzubeziehen.

Erfindungsgemäß ist vorgesehen, dass bei beiden Ausführungsbeispielen das Ventil 12 signalleitend mit dem Motormanagement einer Verbrennungskraftmaschine verbunden ist und die Luftkammer 11 im Leerlauf der Verbrennungskraftmaschine mit der Umgebung 14 verbindet oder bei Drehzahlen außerhalb es Leerlaufbereichs verschlossen ist.

## Patentansprüche

1. Anordnung eines schaltbaren hydraulisch dämpfenden Lagers zur Abstützung einer Verbrennungskraftmaschine, mit einem Traglager (1) und einem Auflager (2), die durch eine Tragfeder (3) aus elastomerem Werkstoff elastisch nachgiebig aufeinander abgestützt sind, umfassend eine Arbeits- (4) und eine Ausgleichskammer (5), die in Richtung (6) der betriebsbedingt eingeleiteten Schwingungen hintereinander angeordnet und jeweils mit Dämpfungsflüssigkeit (7) gefüllt sind, wobei die Arbeits-(4) und die Ausgleichskammer (5) auf den einander zugewandten Seiten durch eine gemeinsame Trennwand (8) begrenzt und durch zumindest einen in der Trennwand (8) angeordneten Dämpfungskanal (9) flüssigkeitsleitend verbunden sind, wobei die Arbeitskammer (4) von zumindest einer elastisch nachgiebigen Membran (10) begrenzt ist, die auf der der Arbeitskammer (4) abgewandten Seite eine Luftkammer (11) begrenzt, die in Abhängigkeit vom Betriebszustand der abgestützten Verbrennungskraftmaschine durch ein schaltbares Ventil (12) und ein Rückschlagventil (13) strömungsleitend mit der Umgebung (14) verbindbar ist, **dadurch gekennzeichnet, daß** das Rückschlagventil (13) selbsttätig ausgebildet ist, dass das schaltbare Ventil (12) signalleitend mit dem Motormanagement der Verbrennungskraftmaschine verbunden ist und die Luftkammer (11) im Leerlauf der Verbrennungskraftmaschine mit der Umgebung (14) verbindet oder bei Drehzahlen außerhalb des Leerlaufbereichs geschlossen ist und dass die Luftkammer (11) bei geschlossen geschaltetem Ventil (12) und Zugbewegungen des Lagers zur Erhöhung der Lagersteifigkeit mit über das selbsttätig ausgebildete Rückschlagventil (13) nachströmender Luft aufblähbar ist und dass bei geschlossen geschaltetem Ventil (12) und Druckbewegungen des Lagers das Rückschlagventil (13) selbsttätig in Geschlossenstellung bringbar ist.

2. Anordnung nach Anspruch 1, **dadurch gekennzeichnet, daß** das Traglager (1) einen Kern (15) und ein Kernblech (16) umfaßt, das mit der Tragfeder (3) haftend verbunden ist und daß das Kernblech (16) mit dem Kem (15) formschlüssig und dichtend verbunden ist.

3. Anordnung nach einem der Ansprüche 1 oder 2, **dadurch gekennzeichnet, daß** die Luftkammer (11) von der Membran (10), dem Kern (15) und dem Kernblech (16) begrenzt ist.

4. Anordnung nach einem der Ansprüche 1 bis 3, **dadurch gekennzeichnet, daß** sich die Membran (10) quer zur Richtung (6) der eingeleiteten Schwingungen erstreckt und mit einem sich in axialer Richtung erstreckenden Flansch (17) des Kernblechs (16) dichtend verbunden ist.

5. Anordnung nach einem der Ansprüche 1 bis 4, **dadurch gekennzeichnet, daß** die Tragfeder (3) und die Membran (10) materialeinheitlich und einstückig ineinander übergehend ausgebildet sind.

6. Anordnung nach einem der Ansprüche 1 bis 5, **dadurch gekennzeichnet, daß** das Ventil (12) elektromagnetisch betätigbar ist.

7. Anordnung nach einem der Ansprüche 1 bis 6, **dadurch gekennzeichnet, daß** das Ventil (12) und das Rückschlagventil (13) gemeinsam eine vormontierbare Einheit (18) bilden.

8. Anordnung nach Anspruch 7, **dadurch gekennzeichnet, daß** der Kern (15) im wesentlichen kreisringförmig ausgebildet ist und daß die Einheit (18) mit dem Kern (15) verbunden ist.

9. Anordnung nach Anspruch 8, **dadurch gekennzeichnet, daß** die Einheit (18) in einer Ausnehmung (19) des Kerns (15) angeordnet und mit dem Kern (15) verschraubt ist.

10. Anordnung nach einem der Ansprüche 7 bis 9, **dadurch gekennzeichnet, daß** der Kern (15) und/oder die Einheit (18) zumindest einen Anschlagpuffer (20) aufweisen und daß die Membran (10) zur Begrenzung extremer Auslenkbewegungen bei Druckbewegungen des Lagers an dem Anschlagpuffer (20) anlegbar ist.

11. Anordnung nach Anspruch 10, **dadurch gekennzeichnet, daß** die Membran (10) auf der dem Anschlagpuffer (20) zugewandten Seite eine Oberflächenprofilierung (21) aufweist.

12. Anordnung nach einem der Ansprüche 1 bis 9, **dadurch gekennzeichnet, daß** die Membran (10) einen Anschlagpuffer (20) bei statischer Vorlast des Lagers unter elastischer Vorspannung anliegend berührt.

13. Anordnung nach einem der Ansprüche 1 bis 12, **dadurch gekennzeichnet, daß** zumindest die Tragfeder (3) außenumfangsseitig von einer Wärmeschutzkappe (22) umschlossen ist.

14. Anordnung nach Anspruch 13, **dadurch gekennzeichnet, daß** die Wärmeschutzkappe (22) ortsfest am Traglager (1) festgelegt ist.

## Claims

1. An arrangement of a switchable, hydraulically damped support for supporting an internal combustion engine, having a load-bearing support (1) and a bearing (2) which are supported in an elastically flexible manner on each other by a load-bearing spring (3) of elastomeric material, comprising a working chamber (4) and an equalizing chamber (5) which are arranged successively in the direction (6) of the vibrations initiated by the operation and are in each case filled with damping fluid (7), the working chamber (4) and the equalizing chamber (5) being delimited on the mutually facing sides by a common partition (8) and being connected in a fluid-conducting manner by at least one damping duct (9) arranged in the partition (8), the working chamber (4) being delimited by at least one elastically flexible membrane (10) which, on the side facing away from the working chamber (4), delimits an air chamber (11) which can be connected in a flow-conducting manner to the surroundings (14) by a switchable valve (12) and a non-return valve (13) as a function of the operating state of the supported internal combustion engine, **characterized in that** the non-return valve (13) is automatically formed, **in that** the switchable valve (12) is connected in a signal-conducting manner to the engine management of the internal combustion engine and connects the air chamber (11) to the surroundings (14) during idling of the internal combustion engine or is closed at speeds of rotation outside the idling range, and **in that**, with the valve (12) switched to closed and with tensile movements of the support, the air chamber (11) can be inflated with air flowing downstream via the automatically formed non-return valve (13), in order to increase the stiffness of the support, and **in that**, with the valve (12) switched to closed and with compressive movements of the support, the non-return valve (13) can be brought automatically into the closed position.

2. An arrangement according to claim 1, **characterized in that** the load-bearing support (1) comprises a core (15) and a core plate (16) which is adhesively connected to the load-bearing spring (3), and **in that** the core plate (16) is connected in a form-fitting and sealing manner to the core (15).

3. An arrangement according to either of claims 1 and 2, **characterized in that** the air chamber (11) is delimited by the membrane (10), the core (15) and the core plate (16).

4. An arrangement according to any one of claims 1 to 3, **characterized in that** the membrane (10) extends transversely with respect to the direction (6) of the introduced vibrations and is connected in a sealing manner to a flange (17) of the core plate (16), which flange extends in the axial direction.

5. An arrangement according to any one of claims 1 to 4, **characterized in that** the load-bearing spring (3) and the membrane (10) are formed of the same material and in a manner such that they merge integrally into each other.

6. An arrangement according to any one of claims 1 to 5, **characterized in that** the valve (12) can be actuated electromagnetically.

7. An arrangement according to any one of claims 1 to 6, **characterized in that** the valve (12) and the non-return valve (13) together form a preassemblable unit (18).

8. An arrangement according to claim 7, **characterized in that** the core (15) is of essentially circular design, and **in that** the unit (18) is connected to the core (15).

9. An arrangement according to claim 8, **characterized in that** the unit (18) is arranged in a recess (19) of the core (15) and is screwed to the core (15).

10. An arrangement according to any one of claims 7 to 9, **characterized in that** the core (15) and/or the unit (18) have at least one stop buffer (20), and **in that** the membrane (10) can be placed against the stop buffer (20) in order to limit extreme deflection movements during compressive movements of the support.

11. An arrangement according to claim 10, **characterized in that** the membrane (10) has a surface profiling (21) on the side facing the stop buffer (20).

12. An arrangement according to any one of claims 1 to 9, **characterized in that** the membrane (10) comes into bearing contact with a stop buffer (20) with elastic prestress under a static preload of the support.

13. An arrangement according to any one of claims 1 to 12, **characterized in that** at least the load-bearing spring (3) is enclosed on the outer circumferential side by a heat protection cap (22).

14. An arrangement according to claim 13, **characterized in that** the heat protection cap (22) is fixed on the load-bearing support (1) in a fixed position.

## Revendications

1. Agencement d'un support commutable à amortissement hydraulique pour soutenir un moteur à combustion interne, avec un support porteur (1) et un élément d'appui (2) qui sont soutenus l'un sur l'autre de manière élastiquement flexible par un ressort porteur (3) en matériau élastomère, comprenant une chambre de travail (4) et une chambre de compensation (5) qui sont disposées l'une à la suite de l'autre dans la direction (6) des vibrations introduites en fonctionnement et sont respectivement remplies de liquide d'amortissement (7), la chambre de travail (4) et la chambre de compensation (5) étant délimitées, sur leurs côtés en vis-à-vis, par une cloison séparatrice commune (8) et étant reliées en conduction de liquide par au moins un canal d'amortissement (9) disposé dans la cloison séparatrice (8), la chambre de travail (4) étant délimitée par au moins une membrane (10) élastiquement flexible qui délimite, sur le côté opposé à la chambre de travail (4), une chambre d'air (11) qui peut être reliée en conduction de fluide à l'environnement (14), en fonction de l'état de fonctionnement du moteur à combustion interne soutenu, par une soupape commutable (12) et un clapet anti-retour (13), **caractérisé en ce que** le clapet anti-retour (13) est conçu automatique, **en ce que** la soupape commutable (12) est reliée en conduction de signaux au système de gestion du moteur à combustion interne et elle relie la chambre d'air (11) à l'environnement (14) au régime de ralenti du moteur à combustion interne ou est fermée à des régimes situés en dehors de la plage de ralenti, et **en ce que** la chambre d'air (11), la soupape commutable (12) étant fermée et en présence de mouvements de traction du support, peut afin d'augmenter la rigidité du support être gonflée par de l'air affluant par l'intermédiaire du clapet anti-retour (13) conçu automatique, et **en ce que**, la soupape commutable (12) étant fermée et en présence de mouvements de compression du support, le clapet anti-retour (13) peut être amené automatiquement en position fermée.

2. Agencement selon la revendication 1, **caractérisé en ce que** le support porteur (1) comprend une âme (15) et une tôle d'âme (16) qui est reliée en adhérence au ressort porteur (3), et **en ce que** la tôle d'âme (16) est reliée en engagement positif et en étanchéité à l'âme (15).

3. Agencement selon la revendication 1 ou 2, **caractérisé en ce que** ma chambre d'air (11) est délimitée par la membrane (10), l'âme (15) et la tôle d'âme (16).

4. Agencement selon l'une des revendications 1 à 3, **caractérisé en ce que** la membrane (10) s'étend transversalement à la direction (6) des vibrations introduites et est reliée en étanchéité à une bride (17) de la tôle d'âme (16) qui s'étend en direction axiale.

5. Agencement selon l'une des revendications 1 à 4, **caractérisé en ce que** le ressort porteur (3) et la membrane (10) sont réalisés en un même matériau et en se raccordant l'un à l'autre d'un seul tenant.

6. Agencement selon l'une des revendications 1 à 5, **caractérisé en ce que** la soupape (12) est à actionnement électromagnétique.

7. Agencement selon l'une des revendications 1 à 6, **caractérisé en ce que** la soupape (12) et le clapet anti-retour (13) forment ensemble une unité (18) pouvant être pré-assemblée.

8. Agencement selon la revendication 7, **caractérisé en ce que** l'âme (15) est réalisée essentiellement en forme de couronne, et **en ce que** l'unité (18) est reliée à l'âme (15).

9. Agencement selon la revendication 8, **caractérisé en ce que** l'unité (18) est disposée dans un évidement (19) de l'âme (15) et reliée à l'âme (15) par vissage.

10. Agencement selon l'une des revendications 7 à 9, **caractérisé en ce que** l'âme (15) et/ou l'unité (18) présentent au moins un tampon de butée (20), et **en ce que** la membrane (10) peut être appliquée contre le tampon de butée (20) afin de limiter des mouvements d'excursion extrêmes lors de mouvements de compression du support.

11. Agencement selon la revendication 10, **caractérisé en ce que** la membrane (10) présente un profilage de surface (21) sur le côté tourné vers le tampon de butée (20).

12. Agencement selon l'une des revendications 1 à 9, **caractérisé en ce que** la membrane (10) vient s'appliquer sous précontrainte élastique contre un tampon de butée (20) lorsque le support est soumis à une précharge statique.

13. Agencement selon l'une des revendications 1 à 12, **caractérisé en ce qu'**au moins le ressort porteur (3) est entouré sur sa circonférence extérieure par une coiffe (22) de protection thermique.

14. Agencement selon la revendication 13, **caractérisé en ce que** la coiffe (22) de protection thermique est immobilisée en position fixe sur le support porteur (1).
